# EUROPÄISCHE PATENTSCHRIFT

(11) **EP 1 657 190 B1**
(45) Veröffentlichungstag und Bekanntmachung des Hinweises auf die Patenterteilung: **06.06.2007**
(21) Anmeldenummer: 05024532.3
(22) Anmeldetag: 10.11.2005
(51) Int. Cl.: B65G 47/90

(54) **Vorrichtung zum Aufnehmen und Abgeben von Stückgut**
Device for engaging and dispensing articles
Dispositif de saisie et délivrance d'objets

(30) Priorität: 12.11.2004 DE 102004054713
(43) Veröffentlichungstag der Anmeldung: 17.05.2006
(73) Patentinhaber: HOLMATEC Maschinenbau GmbH, 48499 Salzbergen (DE)
(72) Erfinder: Grosse-Rechtien, Heribert, 48431 Rheine (DE)
(74) Vertreter: Engelmann, Kristiana

(56) Entgegenhaltungen:
- EP-A- 0 416 747
- EP-A- 0 666 149
- DE-A1- 3 440 954
- US-A- 4 598 942

## Beschreibung

Die Erfindung betrifft eine Vorrichtung zum Aufnehmen und Abgeben von Stückgut, insbesondere in Form von Säcken, Beuteln o. dgl. nachgiebigen Verpackungen, gemäß dem Oberbegriff des Anspruchs 1.

Bei bekannten Vorrichtungen zum Aufnehmen und Abgeben von Stückgut (EP 0 666 149 B1; DE 34 40 954 C3) sind diese mit jeweiligen gegenüberliegend an einem Tragrahmen gehaltenen Greiferarmen versehen, mit deren einwärts gerichteten unteren Enden das Stückgut umschließend aufnehmbar ist. Dabei werden die Greifarme anderenends in einem Führungselement gegenläufig auseinanderbewegt und die damit geschlossene Vorrichtung kann das Stückgut in der nachfolgenden Handhabungsphase halten. Bei Erreichen einer vorgesehenen Ablagestellung werden die in Schließstellung befindlichen Schwenkachsen der Greifarme einwärts aufeinander zu bewegt, so daß zwangsweise ein Auseinanderschwenken der unteren Enden der Greifarme erfolgt und damit das Stückgut freigegeben wird. Mit diesem Handhabungs- und Bewegungsablauf wird ein Zwei-Phasen-Vorgang beim Abgeben deutlich, bei dem in der ersten Phase das Zusammenführen der Greifer erforderlich ist, um das Stückgut freizugeben. Erst danach kann die Vorrichtung in der zweiten Phase angehoben und in die jeweilige Ausgangsstellung zur Aufnahme des nächsten Stückgutes zurückgeführt werden. Diese zwei nacheinander ablaufenden Bewegungen beim Abgeben des Stückgutes erfordern einen nachteilig hohen Zeitaufwand, so daß beim Stapeln des Stückgutes auf Paletten o. dgl. die Beladezeit nachteilig verlängert ist. Außerdem ist durch die Bewegung der Greifarme beim Verlagern und Zusammenführen der Schwenkgelenke auch ein entsprechender Bewegungsfreiraum an den freien Enden der Greifer erforderlich, so daß die Vorrichtung unter engen Platzverhältnissen nur eingeschränkt anwendbar ist.

Die Erfindung befaßt sich mit dem Problem, eine Vorrichtung zum Aufnehmen und Abgeben von Stückgut zu schaffen, die mit geringem technischem Aufwand einen schnelleren Bewegungszyklus ermöglicht und mit geringem Raumbedarf auch unter beengten Bewegungs- und Ablagebedingungen für weitgehend beliebiges Stückgut einsetzbar sind.

Die Erfindung löst diese Aufgabe durch eine Vorrichtung mit den Merkmalen des Anspruchs 1. Hinsichtlich wesentlicher weiterer Ausgestaltungen wird auf die Ansprüche 2 bis 27 verwiesen.

Die erfindungsgemäße Vorrichtung ist im Bereich ihrer Greifer-Baugruppe als eine Baueinheit konzipiert, bei der zumindest einer der beiden Greifer das Stückgut mit einer Anlagekontur erfassen kann, die aus der Greif- und Handhabungsstellung in die Freigabestellung herausdrehbar ist. Durch entsprechende Antriebsorgane ist diese Vorrichtung in eine programmgesteuerte Handhabungsbaugruppe so integrierbar, daß deren Bewegungszyklus mittels der die erfindungsgemäße Anlagekontur aufweisenden Greifer durch eine kürzere Abgabephase beschleunigt abläuft.

Der herausdrehbare Greifer weist eine Anlagekontur auf, die nach Art einer überlagerte Schwenk- und Hubkomponenten aufweisenden "Korkenzieher-Bewegung" an dem Stückgut entlanggeführt und gleichzeitig im Sinne einer Rückbewegung verlagert wird. Damit wird für insbesondere eine nachgiebige Umfangskonsistenz aufweisende Stückgüter, z. B. Säcke, Beutel o. dgl., eine Greifvorrichtung bereitgestellt, die mit einer Überlagerung der in der Freigabe- und Hubphase üblicherweise nacheinander ablaufenden Bewegungen wirksam ist, so daß damit ein Handhabungszyklus insgesamt in kürzerer Zeit ausgeführt wird und sich damit Entnahme- oder Beladezeiten vorteilhaft verkürzen.

Mit den als Wendelzinken ausgebildeten Greifern wird in der Abgabephase auch eine verbesserte Funktion und Einsetzbarkeit der Vorrichtung unter beengten Platzverhältnissen bereits dann gewährleistet, wenn einer der Greifer die herausdrehbare Anlagekontur aufweist. Dabei ist die Dreh- oder Schwenkbewegung des Greifers so mit einer Hubbewegung synchronisiert, daß das Herausdrehen aus der Greifstellung weitgehend ohne seitlichen Überstand möglich ist. Der zugeordnete zweite als Gegenhalter wirksame Greifer wird dabei durch eine vergleichsweise einfache lineare Hubbewegung ebenfalls aus seiner Greifstellung angehoben. In jedem Fall wird der herausdrehbare Greifer mit seiner Anlagekontur zumindest phasenweise gleitend am Stückgut entlangbewegt, wobei die Anlagekontur eine schraubenlinienförmige Bewegungsbahn durchläuft

Damit ermöglicht die Vorrichtung auch das Einbringen von insbesondere nachgiebigen Stückgütern in Lücken einer Stapelung bzw. kann das Stückgut auch in einem engen Spaltabstand zu einer Seitenwandung o. dgl. Begrenzungen in eine positionsgenaue Lage verbracht werden. Dabei wird der sich aus der Greifstellung herausdrehende Greifer unter beengten Platzbedingungen ohne zusätzlichen Seitenabstand in die Freigabestellung bewegt.

Bei der Handhabung von Massenartikeln, z. B. von Stückgut in Verpackungen auf Füllmaschinen, kann mit der heraus- und eindrehbare Greifer aufweisenden Vorrichtung die produktivitätsbestimmende Bewegungszeit innerhalb eines Handhabungszyklusses vorteilhaft verkürzt werden. Die Überlagerung der Schwenk- und Hubbewegung beim Herausdrehen der Greifer erfolgt auf engstem Raum, so daß bisher bei unhandlichem Stückgut aufwendig auszuführende Handarbeüen beim Füllen von engen Verpackungen, z. B. mit Lebensmitteln, nunmehr automatisch ausführbar sind.

Weitere Einzelheiten und vorteilhafte Wirkungen der Erfindung ergeben sich aus der nachfolgenden Beschreibung und den Zeichnungen, die zwei Ausführungsbeispiele der erfindungsgemäßen Vorrichtung veranschaulichen. In der Zeichnung zeigen:
- Fig. 1: eine teilweise geschnittene Vorderansicht einer erfindungsgemäßen Vorrichtung in einer ersten Ausführung gemäß einer Linie 1-1 in Fig. 4 mit zwei gegenüberliegend der Längsmittelebene das Stückgut erfassenden Greifern in Aufnahmestellung,
- Fig. 2: eine Vorderansicht ähnlich Fig. 1 mit der Vorrichtung im Nahbereich einer das Stückgut in einem Stapel platzierender Abgabeposition,
- Fig. 3: die Vorrichtung beim Rückhub in der Abgabephase gemäß Fig. 2 mit dabei wirksamen Bewegungen,
- Fig. 4: eine Seitenansicht der Vorrichtung gemäß Fig. 1 mit dem von mehreren Greifern zwischen gegenüberliegenden Reihen aufgenommenen Stückgut,
- Fig. 5: eine teilweise geschnittene Draufsicht der Vorrichtung gemäß einer Linie V-V in Fig. 4,
- Fig. 6: eine Seitenansicht der Vorrichtung mit mehreren gegenüberliegenden Greifer-Paaren in einer Abgabeposition ähnlich Fig. 3,
- Fig. 7: eine Draufsicht ähnlich Fig. 5 mit den in Abgabephase herausgedrehten Anlagekonturen der Greifer,
- Fig. 8: eine Vorderansicht der Vorrichtung in einer zweiten Ausführung zur Handhabung von nachgiebigem Stückgut, insbesondere einem mehrlagigen Lebensmittel, mit in Greifstellung befindlichen Greifern, und
- Fig. 9: eine Vorderansicht ähnlich Fig. 8 mit bei Aufnahme des Stückgutes gespreizten Greifern.

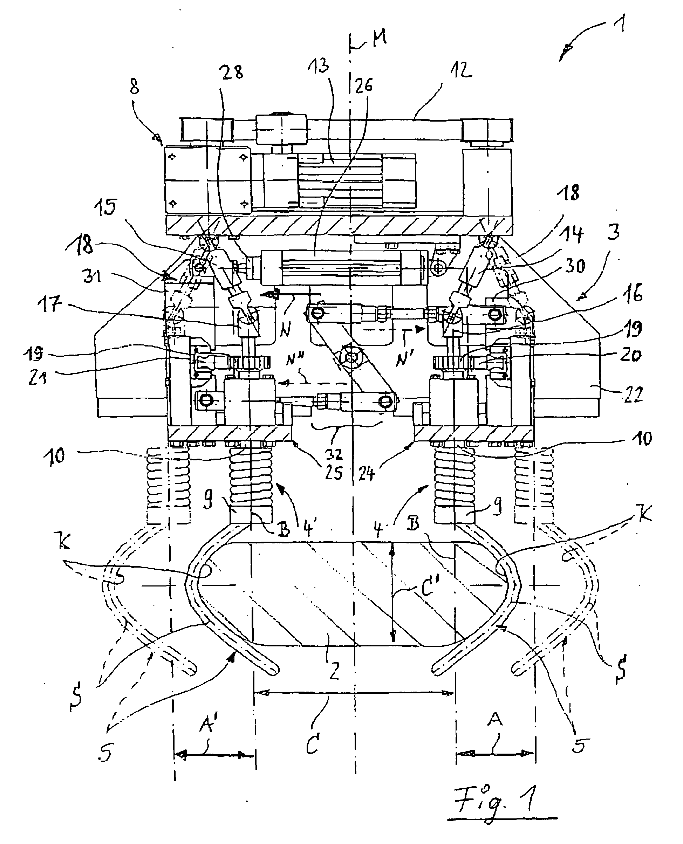

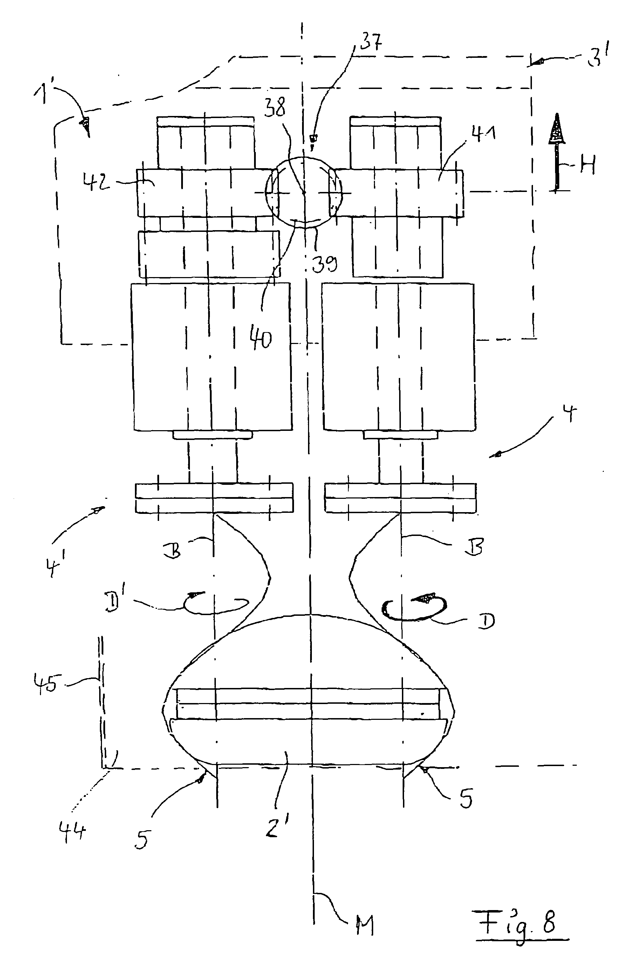

In Fig. 1 ist eine insgesamt mit 1 bezeichnete Vorrichtung zum Aufnehmen und Abgeben eines Stückgutes 2 dargestellt, wobei dieses insbesondere in Form einer nachgiebigen Verpackung als Sack, Beutel o. dgl. ausgebildet sein kann. In einer zweiten Ausführung gemäß Fig. 8 ist die Anwendung der Vorrichtung 1' bei der Handhabung eines Stückgutes 2' in Form eines mehrlagigen Lebensmittels, nämlich einem Sandwich, dargestellt.

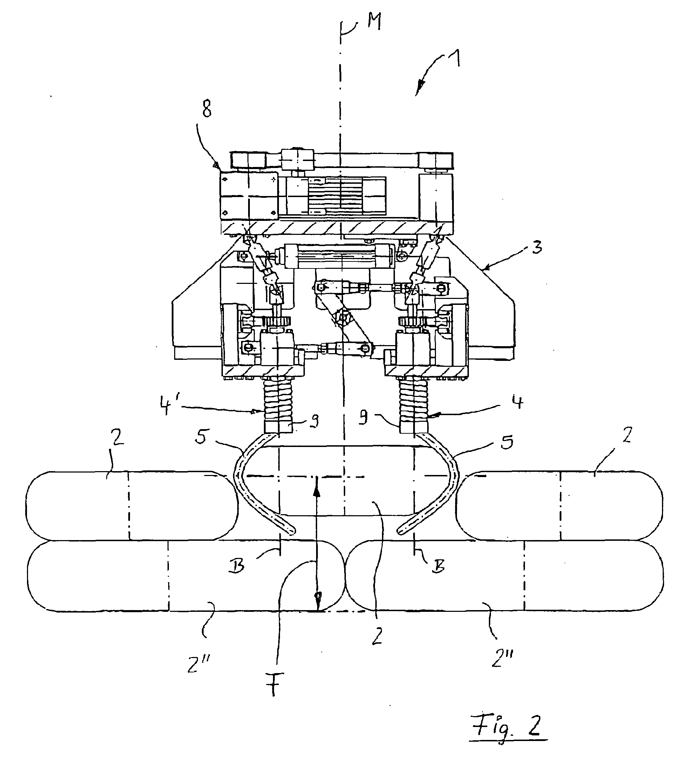

Die erste Ausführung der Vorrichtung 1 weist als an sich bekannte Bauteile zumindest zwei gegenüberliegend an einem Tragrahmen 3 gehaltene und in eine Greifstellung (Fig. 1) bewegbare Greifer 4, 4' auf. Mit diesen Greifern 4, 4' wird das Stückgut 2 außenseitig erfaßt und nach gemeinsamer Verlagerung von Vorrichtung 1 und Stückgut 2 in eine Abgabestellung (Fig. 2) kann das Stückgut 2 in einer vorgegebenen Position freigegeben werden. Bei diesem bekannten Vorgang werden die Greifer 4, 4' aus einer in Fig. 1 durch Strich-Punkt-Linien dargestellte Aufnahmestellung in Pfeilrichtung A, A' zusammengeführt und nach dem Freigeben dieses ersten Stückgutes 2 können die entsprechend positionierten Greifer bekannter Vorrichtungen wiederholt in die Aufnahmestellung entgegen den Pfeilrichtungen A, A' verschoben werden, so daß damit eine im Vergleich zum Halte- bzw. Greifabstand C vergrößerte Ausgangsstellung erreicht ist.

Die Vorrichtung 1 erfindungsgemäßer Ausführung weist zumindest einen Greifer 4, 4' auf, dessen Greifstruktur mit einer aus der Grolfstellung (Fig. 2) herausdrehbaren Anlagekontur K ausgebildet ist. Die Darstellungen gemäß Fig. 1 und 2 zeigen dabei, daß der Greifer 4, 4' im Bereich der Anlagekontur K vorteilhaft so geformt ist, daß das erfaßte Stückgut 2 zumindest bereichsweise untergriffen wird und damit eine kraft- und formschlüssige Haltestellung definiert ist.

In der gemäß Fig. 1 bis 7 gezeigten Ausführung der Vorrichtung 1 sind beide gegenüberliegend einer Längsmittelebene M angeordnete Greifer 4, 4' jeweils mit der Anlagekantur K versehen, wobei es sich versteht, daß der bzw. die Greifer 4, 4' sowohl aus der Greifstellung herausdrehbar als auch in einer umgekehrten Bewegungsfolge in die Greifsteltung eindrehbar sind. Bei diesen Bewegungen wird die Anlagekontur K zumindest phasenweise gleitend am Stückgut 2 entlanggeführt. Die gegenüberliegenden Greifer 4, 4' werden dabei insbesondere gleichzeitig so bewegt, daß das Hineindrehen bzw. Herausdrehen erfolgt. Ebenso ist denkbar, daß diese Bewegungen nacheinander erfolgen.

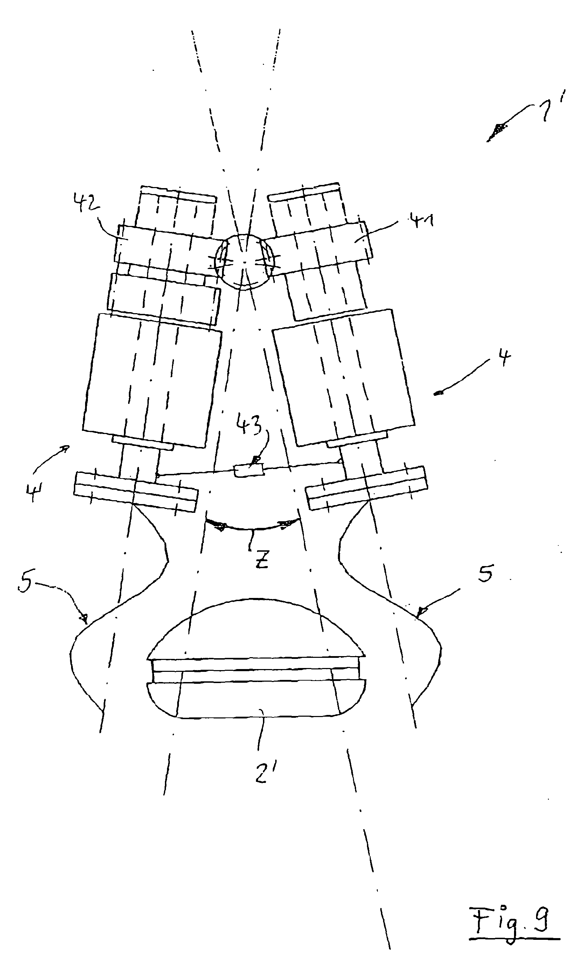

Für die in Fig. 1 veranschaulichten Bewegungsphasen bei der Aufnahme des Stückgutes 2 (Bewegungspfeile A, A') sind die Greifer 4, 4' schubbeweglich an der Vorrichtung 1 gehalten und in der zweiten Ausführung der Vorrichtung 1' (Fig. 9) ist zur Aufnahme des Stückgutes 2' eine Schwenkbarkeit der Greifer 4, 4' vorgesehen. Nach Erreichen der für das Stückgut 2, 2' vorgesehenen Abgabeposition sind die Greifer 4, 4' in jedem Falle aus der Greifstellung herausdrehbar.

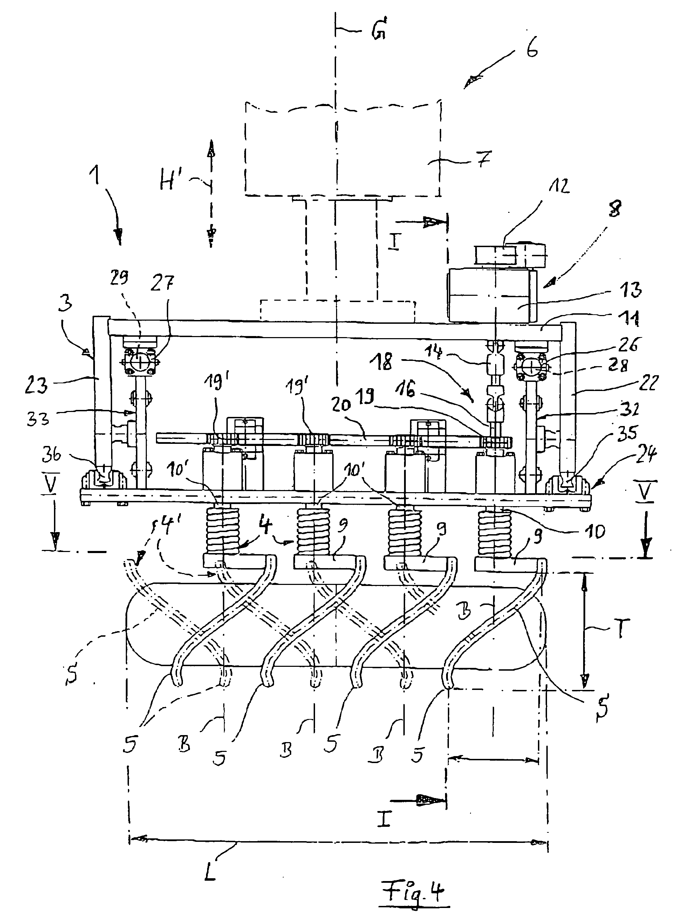

Die Zusammenschau von Vorder- und Seitenansicht gemäß Fig. 1 und Fig. 4 verdeutlicht die geometrische Gestaltung der als jeweilige Reihe angeordneten Greifer 4, 4', wobei diese im Bereich ihrer zum Greifen, Aufnehmen und Abgeben vorgesehenen Anlagekontur K jeweils mit einem in einer schraubenlinienförmigen Raumkurve S verlaufenden Wendelzinken 5 versehen sind.

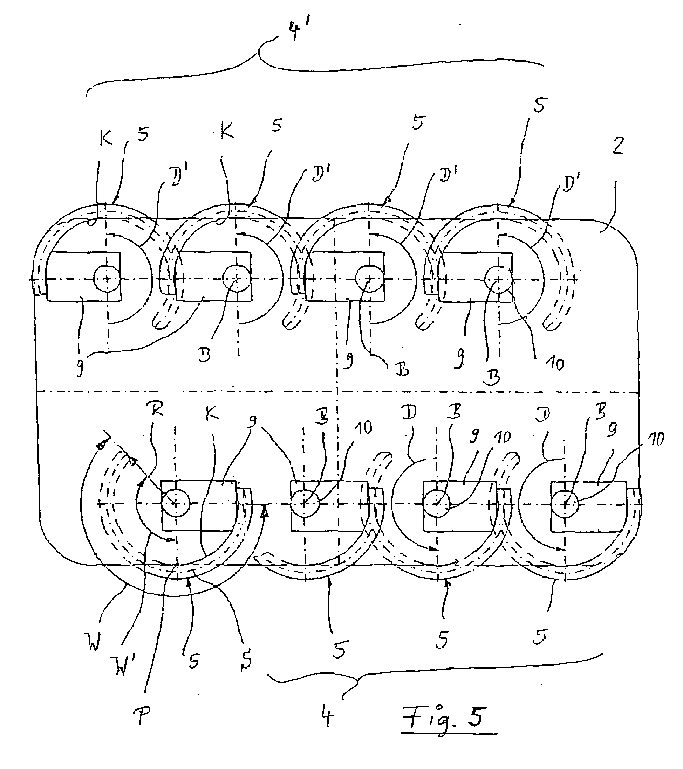

In hervorgehobenen Details gemäß einzelner der Wendelzinken 5 in Fig. 4 und 5 wird die Ausbildung einer anwendungsspezifisch variablen Form des Wendelzinkens 5 deutlich. Gemäß Fig. 4 sind ein Wendelradius R und eine Wendelsteigung T des Wendelzinkens 5 ersichtlich und in der Draufsicht gemäß Fig. 5 wird verdeutlicht, daß mit dieser Darstellung des Wendelzinkens 5 ein dessen Wendellänge beeinflussender Wendelbogen W definierbar ist. Mit diesen variabel ausführbaren Abmessungen und Profilierungen der Anlagekontur K sowie einem vom Greifer 4 bzw. Wendelzinken 5 ausführbaren Drehwinkelmaß D, D' (Bewegungspfeite in Fig. 5) ist entsprechend der Transportaufgabe der Vorrichtung 1 eine Anpassung an die Abmessungen (z. B. Breite C, Höhe C', Fig. 1) und/oder die Festigkeit des jeweiligen Stückgutes 2 bzw. dessen Umverpackung möglich, Insbesondere kann der Wendelzinken 5 durch diese variable Konstruktion an die jeweilige kundenspezifisch zu ändemde Greiffunktion angepaßt werden (Fig. 8).

Die Darstellungen gemäß Fig. 4 bis 7 zeigen die Ausführung der Vorrichtung 1 für den Transport des eine Länge L aufweisenden Stückgutes 2, zu dessen optimaler Handhabung die Vorrichtung 1 am Tragrahmen 3 die jeweils zwei Reihen von Greifern 4, 4' aufweist, die mit paarweise gegenüberliegend der Mittellängsebene M angeordneten Wendelzinken 5 versehen sind. Diese weisen im wesentlichen gleiche Anlagekonturen K auf und sind in jeweiligen Drehrichtungen D, D' gegensinnig verlagerbar (Fig. 5), so daß in Freigabestellung die in Fig. 7 dargestellte Öffrtungsstellung des Systems erreicht ist.

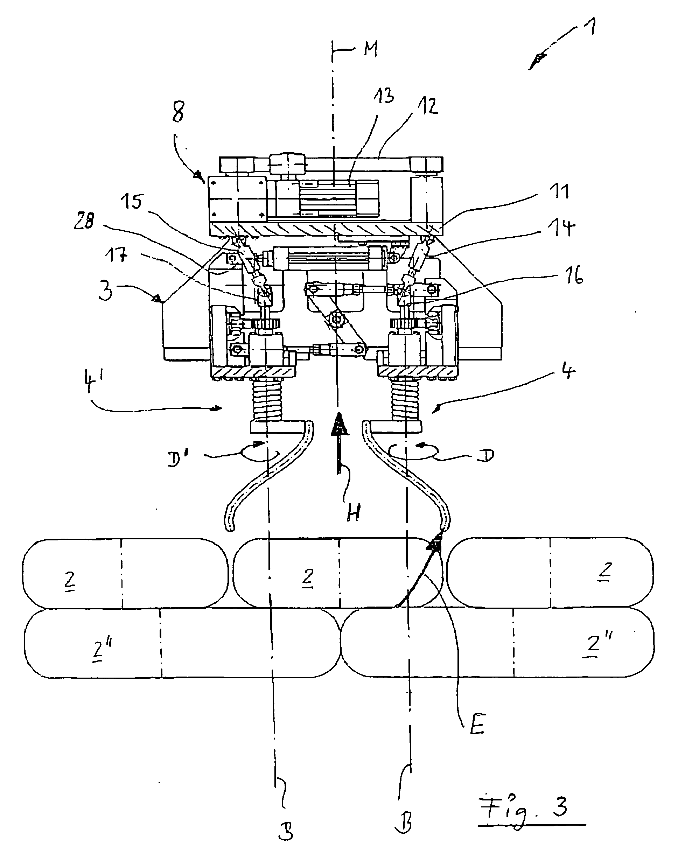

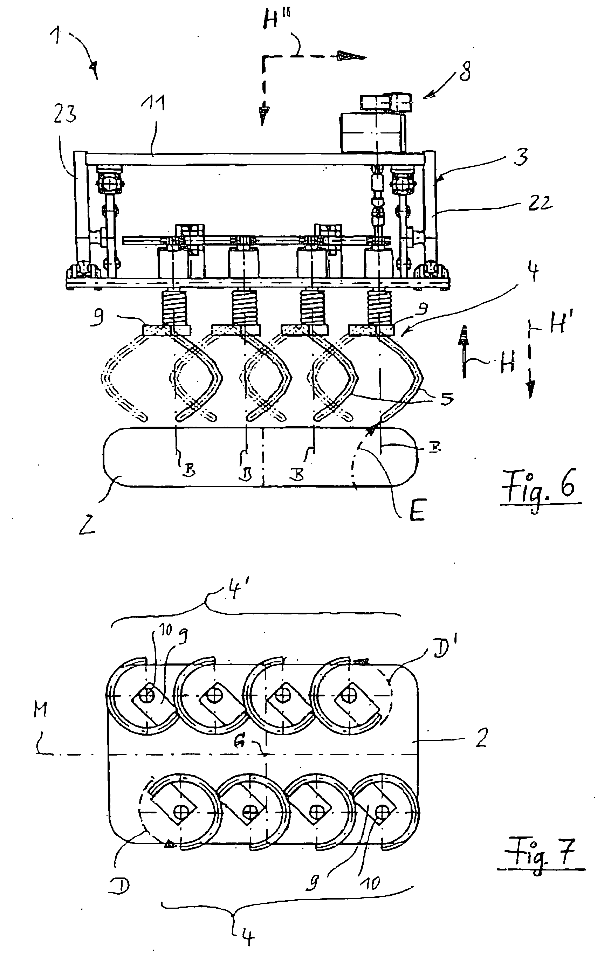

Wie bereits im Zusammenhang mit Fig. 1 beschrieben, sind auch die Greifer 4, 4' der beiden parallelen Greifer-Reihen zur Aufnahme des Stückgutes 2 in die Greifstellung aufeinander zu bewegbar (Pfeil A, A'), so daß danach das Stückgut 2 in der gemäß Fig. 1 und 4 ersichtlichen Lage kraft- und formschlüssig über die Länge L durch eine an diese optimal anpaßbare Anzahl von Greifern 4, 4' gehalten ist und danach das System zur vorgesehenen Abgabestelle hin (Fig. 2) bewegt werden kann. Bei der hier erfolgenden Abgabe des Stückgutes 2 sind die Wendelzinken 5 durch eine synchrone Schwenk-Hub-Bewegung (Pfeil D. D', Fig. 5; Pfeil H, Fig. 3) verlagerbar, so daß die mit einem Pfeil E dargestellte Herausdrehbewegung (Fig. 3, Fig. 6) an den Wendelzinken 5 erreicht wird. Mit diesem kontinuierlichen Bewegungsablauf (der vorteilhaft mit einer Rückführung der Vorrichtung 1 in die Ausgangsstellung für die Erfassung des nächsten Stückgutes 2 überlagert ist - Pfeil H", Fig. 6) erfolgt eine insgesamt unterbrechungsfreie Ablage- und Rückführphase innerhalb eines Bewegungszyklus, so daß damit eine Verkürzung der Beladezeit erreicht wird.

Die Vorrichtung 1 wirkt als funktionaler Teil einer automatischen Handhabungsbaugruppe 6 (Strichdarstellung gemäß Fig. 4) mit jeweiligen Antriebseinheiten zusammen, so daß damit das von der synchronen Schwenk-Hub-Bewegung bewirkte Herausdrehen E der Wendelzinken 5 (bzw. in umgekehrter Bewegung das Eindrehen) mit entsprechend frei wählbaren Geschwindigkeiten steuerbar ist. Die dargestellte Vorrichtung 1 kann mittels einer im Bereich der Handhabungsbaugruppe 6 vorgesehenen ersten Antriebseinheit 7 anhebbar bzw. absenkbar (Pfeil H', Fig. 4) sein.

Die Steuerung dieser ersten, auch die Hubkomponente H (Fig. 3, Fig. 6) bewirkenden Antriebseinheit 7 wirkt mit einem am Tragrahmen 3 vorgesehenen Drehantrieb (Pfeil D, D') für die Greifer 4, 4' als eine zweite Antriebseinheit 8 zusammen. Durch eine programmierbare Steuerung für diese beiden Antriebe 7 und 8 wird mit der synchronisierten Schwenk-Hub-Bewegung das Heraus- bzw. Eindrehen der Wendelzinken 5 als unterbrechungsfreier Ablauf realisiert.

Ebenso ist denkbar, daß für das Heraus- bzw. Eindrehen der Wendelzinken 5 der erste Antrieb 7 ebenfalls am Greifer 4, 4' vorgesehen ist (nicht dargestellt) und damit bei stationärer Vorrichtung 1 mit deren Baugruppen sowohl der Hub- als auch der Drehantrieb (H, D) im Bereich der Wendelzinken 5 aktiviert werden können, so daß die Greifer 4, 4' entlang dem Tragrahmen 3 vertikal verlagert und verschwenkt sind.

In sämtlichen Darstellungen der Vorrichtung 1 (bzw. 1', Fig. 8) wird deutlich, daß die Wendelzinken 5 im Bereich des Greifers 4, 4' jeweils am äußeren Ende eines Tragschenkels 9 festgelegt sind (Fig. 4), der andererseits mittels einer in Richtung einer Hochachse B verlaufenden Antriebswelle 10, 10' mit dem am Tragrahmen 3 vorgesehenen Drehantrieb 18 bzw. der zweiten Antriebseinheit 8 verbunden ist.

In der Seitenansicht gemäß Fig. 4 wird deutlich, daß die Greifer 4, 4' als Drehantrieb 18 mit einem an einer oberen Tragplatte 11 des Tragrahmens 3 abgestützten und einen Zahnriementrieb 12 aufweisenden Antriebsmotor 13 als Einheit 8 zusammenwirken. Ausgehend von diesem Antriebsmotor 13 sind jeweilige Gelenkwellen 14, 15 vorgesehen, die über jeweilige Zwischenwellen 16 und 17 an der Antriebswelle 10 jeweils eines der Wendelzinken 5 je Reihe angreifen.

Für einen synchronen Antrieb der je Greifer-Reihe vorgesehenen Wendelzinken 5 wird nur einer der Wendelzinken 5 direkt durch die Gelenkwelle 14, 15 angetrieben, wobei im Bereich dieser Antriebsverbindung die Antriebswelle 10 mit einem jeweiligen Antriebszahnrad 19 versehen ist (Fig. 4). Diese Zahnräder 19 greifen jeweils in eine sich in Längsrichtung der Greifer-Reihe erstreckende Zahnstange 20 bzw. 21 kämmend ein. Mit diesen beiden Antriebsverbindungen sind sämtliche in den beiden Reihen nebeneinander angeordneten Zahnräder 19' paralleler Antriebswellen 10' der Wendelzinken 5 antreibbar (Fig. 4) und diese damit durch eine zwangsgesteuerte Bewegungseinleitung synchron drehbar bzw. schwenkbar.

Die teilweise geschnittene Vorderansicht gemäß Fig. 1 verdeutlicht die Festlegung der Greifer-Reihen 4, 4' bzw. der Wendelzinken 5, die auf einem jeweiligen zwischen Querwandplatten 22, 23 des Tragrahmens 3 abgestützten Schlittenteil 24, 25 ortsfest gehalten sind. Diese beiden Schlittenteile 24, 25 sind zur Verlagerung aus der in Fig. 1 dargestellten Ausgangsstellung (Strich-Punkt-Darstellung) in die das Stückgut 2 erfassende Greifstellung senkrecht zur Längsmittelebene M des Tragrahmens 3 hin in Pfeilrichtung A bzw. A' verschiebbar angetrieben. Als Antrieb für die Schlittenteile 24, 25 sind dabei jeweilige im Bereich der Querwandplatten 22, 23 gehaltene Antriebszylinder 26, 27 vorgesehen (Fig. 4), mit denen die vorbeschriebene Verschiebung in die Greifstellung bzw. in die entgegen den Pfeilrichtungen A, A' erfolgende Ausgangsstellung erreichbar ist.

In zweckmäßiger Ausführung sind an den beiden Querwandplatten 22, 23 (Fig. 4) jeweilige Arbeitszylinder 26 bzw. 27 vorgesehen, deren jeweils senkrecht zur Längsmittelebene M des Tragrahmens 3 verlagerbare Kolbenstangen 28, 29 jeweils an einem Schubschenkel 30, 31 eines der beiden Schlittenteile 24, 25 angreifen. Dabei sind die Arbeitszylinder 26, 27 mit gegensinnig verlagerbaren Kolbenstangen 28, 29 angeordnet. Deren Schubbewegung N ist dabei mittels zweier zwischen den Schlittenteilen 24, 25 vorgesehener Umlenkgestänge 32, 33 derart übertragbar, daß im Bereich jeweiliger an den Querwandplatten 22, 23 verlaufender Gleitschienen 34, 35 eine gleichmäßige Schubbewegung N', N" zur Bewegung der Greifer 4, 4' in Pfeilrichtung A, A' erreicht wird (Fig. 1).

Bei der Durchführung eines vollständigen Handhabungszyklusses mittels der Vorrichtung 1 liegt das Stückgut 2 in einer vorgesehenen Aufnahmeposition ähnlich Fig. 1 und die Vorrichtung 1 wird mittels der Baugruppe 6 so weit heruntergefahren, daß die Greifer 4, 4' die vorgesehene Greifhöhe erreicht haben. Danach wird das Stückgut 2 durch Zusammenfahren der Greifer 4, 4' mittels der Wendelzinken 5 erfaßt, wobei die Wendellänge mit einem Bogenmaß W' (Fig. 5) von ca. 110° bis 120° - ausgehend von einem Berührungspunkt P - das Stückgut 2 untergreift. Danach wird die Vorrichtung 1 mittels der Handhabungseinheit 6 zu der in Fig. 2 dargestellten Ablageposition, beispielsweise einem Palettierplatz, verfahren. Dabei ist auch vorgesehen, daß die Vorrichtung 1 insgesamt um eine Halteachse G (Fig. 4) verschwenkt wird und damit im Unterschied zu der in Fig. 2 dargestellten Ablagestellung von unteren Stückgütern 2" die dazu um einen Winkel von 90°versetzte Position von den obenliegenden Stückgütern 2 eingenommen wird.

In dieser Abgabeposition wird die gemäß Steuerprogramm vorgesehene Abgabehöhe F angefahren und zur Freigabe werden die Wendelzinken 5 in Drehrichtung D um ca. 110° bis 120° zurückgeschwenkt und gleichzeitig wird die komplette Vorrichtung 1 in Hubrichtung H (Fig. 3) angesteuert. Diese beiden synchronen Bewegungen D und H sind beispielsweise auf einen sich 350 mm in Richtung der Wendellinie S erstreckenden Wendelzinken 5 abgestimmt, wobei dieser zur Freigabe eine Drehung D um W' = 110° und eine Hubbewegung H von 107 mm erfordert. Danach ist die gemäß Fig. 3 bzw. 6 und 7 gezeigte Abgabestellung erreicht und die Vorrichtung 1 wird zur erneuten Aufnahme eines Stückgutes 2 in die Ausgangsstellung zurückgefahren (Pfeil H"). Dabei werden die Wendelzinken 5 entgegen der Drehrichtung D zurückgedreht, so daß die aus Fig. 1 und 4 ersichtliche Ausgangsstellung erreicht ist. Diese Bewegung erfolgt gleichzeitig im Bereich beider Greifer-Reihen 4, 4' und während der Rückverlagerung der Vorrichtung 1 in die Ausgangsstellung, so daß auch in dieser Phase keine den Handhabungszyklus verlängernden Bewegungspausen auftreten.

In Fig. 8 und 9 ist eine zweite Ausführung der Vorrichtung 1' zum Aufnehmen und Abgeben von Stückgut 2' dargestellt, wobei dieses insbesondere als mehrlagiges Lebensmittel in Form eines Sandwich ausgebildet ist. Die Prinzipdarstellung gemäß Fig. 8 zeigt, daß die zumindest zwei im Bereich des Tragrahmens 3' abgestützten Greifer 4, 4' einenends ein gemeinsames Verbindungsgelenk 37 aufweisen, mit dem die jeweilige Bedienstellung der anderenends ein- bzw. herausdrehbar (Pfeil D, Pfeil H) gehaltenen Wendelzinken 5 veränderbar ist.

In Zusammenschau mit Fig. 9 wird deutlich, daß das Verbindungsgelenk 37 für die Greifer 4, 4' eine senkrecht zur Zeichnungsebene verlaufende Stützachse 38 definiert, so daß die Greifer 4, 4' in eine Spreizstellung (Pfeil Z) zur Längsmittelebene M verlagerbar sind. In dieser Spreizstellung kann ähnlich der in Fig. 1 dargestellten Aufnahmeposition das Stückgut 2' erfaßt werden, wobei die Greifer 4, 4' entgegen der Spreizstellung Z zusammengeführt werden und damit die in Fig. 8 ersichtliche Transportstellung erreicht ist.

Mit diesem Verbindungsgelenk 37 kann die Konstruktion der Vomichtung 1' insgesamt vereinfacht werden, wobei diese ähnlich Fig. 1 eine zweite Antriebseinheit (hier nicht dargestellt) aufweist, die mit einer in Richtung des Verbindungsgelenkes 37 bzw. der Stützachse 38 verlaufenden Zahnwelle 39 zusammenwirkt. Diese Zahnwelle 39 weist umfangsseitig eine jeweilige Profilringe 40 und -nuten bildende Kontur auf, so daß diese nach Art einer Verzahnung mit jeweiligen gegenüberliegenden Stimrad-Antriebsritzeln 41, 42 der Greifer 4, 4' in Eingriffsverbindung bringbar ist. Damit kann über einen linearen Schub-Antrieb der Zahnwelle 39 in Richtung der Stützachse 38 eine Drehbewegung D, D' der Ritzel 41, 42 bzw. der Wendelzinken 5 um die beiden Hochachsen B erzeugt werden und damit wird die für die Eindrehbewegung E erforderliche Schwenkung der Wendelzinken 5 synchron zum Hub H erreicht.

Die Greifer 4, 4' sind im Abstand zu dem die Zahnwelle 39 und die Antriebsritzel 41, 42 aufweisenden Verbindungsgelenk 37 mit einem die Wendelzinken 5 bzw. die Greifer 4, 4' spreizenden Antriebsorgan 43 versehen, mit dem auch die in Fig. 1 dargestellte Greifbewegung (Pfeil A, A') durch die Zusammenführung gemäß Pfeil Z realisierbar ist (Fig. 9).

Die Vorrichtung 1' ist mit ihren spreizbaren und dreh- bzw. schwenkbaren Wendelzinken 5 insbesondere für ein mehrlagiges Stückgut 2' geeignet, wobei dieses besonders vorteilhaft in Verpackungsbehältnisse 45 mit engen Ablageräumen 44 (Fig. 8) eingesetzt werden kann.

## Patentansprüche

1. Vorrichtung zum Aufnehmen und Abgeben von Stückgut (2, 2'), insbesondere in Form von Säcken, Beuteln o. dgl. nachgiebigen Verpackungen, mit zumindest zwei gegenüberliegend an einem Tragrahmen (3, 3') gehaltenen und in eine Greifstellung bewegbaren Greifern (4, 4'), mit denen das Stückgut (2, 2') außenseitig erfaßbar und dieses nach gemeinsamer Verlagerung mit der Vorrichtung (1, 1') in einer Abgabestellung freigebbar ist, **dadurch gekennzeichnet, daß** zumindest einer der Greifer (4, 4') mit einer zumindest aus der Greifstellung herausdrehbaren Anlagekontur (K) versehen ist, derart, daß der Greifer (4, 4') nach Art einer "Korkenzicher-Bewegung" (Pfeil E) am Stückgut (2, 2') entlangführbar ist.

2. Vorrichtung nach Anspruch 1, **dadurch gekennzeichnet, daß** der Greifer (4, 4') das erfaßte Stückgut (2, 2') im Bereich der Anlagekontur (K) zumindest bereichsweise untergreift.

3. Vorrichtung nach Anspruch 1 oder 2, **dadurch gekennzeichnet, daß** zumindest einer der Greifer (4, 4') sowohl in die Greifstellung eindrehbar (Pfeil E) als auch aus dieser herausdrehbar ist und bei diesen Bewegungen die Anlagekontur (K) zumindest phasenweise gleitend am Stückgut (2) verlagerbar ist.

4. Vorrichtung nach einem der Ansprüche 1 bis 3, **dadurch gekennzeichnet, daß** beide gegenüberliegende Greifer (4, 4') jeweils mit der zum Hineindrehen bzw. Herausdrehen (E) vorgesehenen Anlagekontur (K) versehen sind.

5. Vorrichtung nach einem der Ansprüche 1 bis 4, **dadurch gekennzeichnet, daß** die gegenüberliegenden Greifer (4, 4') gleichzeitig oder nacheinander in die Greifstellung hineindrehbar bzw. aus dieser herausdrehbar sind.

6. Vorrichtung nach einem der Ansprüche 1 bis 5, **dadurch gekennzeichnet, daß** der bzw. die Greifer (4, 4') zur Aufnahme des Stückgutes (2) schiebbar (Pfeil A, A') oder schwenkbar (Pfeil Z) ist/sind und danach zumindest einer der Greifer (4, 4') zur Abgabe des Stückgutes (2, 2') aus der Greifstellung herausdrehbar ist.

7. Vorrichtung nach einem der Ansprüche 1 bis 6, **dadurch gekennzeichnet, daß** der bzw. die Greifer (4, 4') im Bereich der zum Greifen, Aufnehmen und Abgeben vorgesehenen Anlagekontur (K) als ein in einer schraubenlinienförmigen Raumkurve (S) verlaufender Wendelzinken (5) ausgebildet ist/sind.

8. Vorrichtung nach einem der Ansprüche 1 bis 7, **dadurch gekennzeichnet, daß** der Wendelzinken (5) des Greifers (4, 4') mit einem mehr als einen 90°-Bogen umfassenden und die Wendellänge bestimmenden Wendelbogen (W) versehen ist.

9. Vorrichtung nach einem der Ansprüche 1 bis 8, **dadurch gekennzeichnet, daß** der Greifer (4, 4') im Bereich des Wendelzinkens (5) durch dessen Wendelradius (R), Wendellänge bzw. -steigung (W, T) und ein vom Greifer (4, 4') ausführbares Drehwinkel-Maß (D) an die Abmessungen und/oder die Festigkeit des jeweiligen Stückgutes (2) bzw. dessen Verpackung anpaßbar ist.

10. Vorrichtung nach einem der Ansprüche 1 bis 9, **dadurch gekennzeichnet, daß** an deren Tragrahmen (3, 3') zwei Reihen von Greifern (4, 4') mit paarweise gegenüberliegend einer Mittellängsebene (M) angeordneten Wendelzinken (5) vorgesehen sind.

11. Vorrichtung nach einem der Ansprüche 1 bis 10, **dadurch gekennzeichnet, daß** die Wendelzinken (5) der beiden parallelen Greifer-Reihen (4, 4') in Greifstellung aufeinander zu bewegbar, zur Abgabe des Stückgutes (2) durch eine synchrone Schwenk-Hub-Bewegung (D, H) herausdrehbar gesteuert (Pfeil E) und dabei in Richtung der Ausgangsstellung rückführbar sind.

12. Vorrichtung nach einem der Ansprüche 1 bis 11, **dadurch gekennzeichnet, daß** diese (1) als Teil einer automatischen Handhabungsbaugruppe (6) mit jeweiligen Antriebseinheiten (7, 8) zusammenwirkt, mit denen das von der synchronen Schwenk-Hub-Bewegung (D, H) bewirkte Heraus- bzw. Eindrehen (E) der Wendelzinken (5) steuerbar ist.

13. Vorrichtung nach einem der Ansprüche 1 bis 12, **dadurch gekennzeichnet, daß** diese (1) mittels einer im Bereich der Handhabungsbaugruppe (6) vorgesehenen ersten Antriebseinheit (7) anhebbar (H) bzw. absenkbar (H') ist und deren Steuerung mit einem am Tragrahmen (3) vorgesehenen Drehantrieb (18) für die Greifer (4, 4') als zweite Antriebseinheit (8) zusammenwirkt, derart, daß mit der überlagerten Schwenk-Hub-Bewegung (D, H) das Heraus- bzw. Eindrehen (E) der Wendelzinken (5) als unterbrechungsfreier Ablauf steuerbar ist.

14. Vorrichtung nach einem der Ansprüche 1 bis 12, **dadurch gekennzeichnet, daß** das Heraus- bzw. Eindrehen (E) der Wendelzinken (5) durch zwei direkt am Greifer (4, 4') vorgesehene Hub- und Drehantriebe steuerbar ist.

15. Vorrichtung nach einem der Ansprüche 1 bis 14, **dadurch gekennzeichnet, daß** die Wendelzinken (5) im Bereich des Greifers (4, 4') jeweils am äußeren Ende eines Tragschenkels (9) festgelegt sind, der andererseits mittels einer in Richtung einer Hochachse (B) verlaufenden Antriebswelle (10) mit dem am Tragrahmen (3) vorgesehenen Drehantrieb (18) als die zweite Antriebseinheit (8) verbunden ist.

16. Vorrichtung nach einem der Ansprüche 1 bis 15, **dadurch gekennzeichnet, daß** die Wendelzinken (5) mit einem an einer oberen Tragplatte (11) des Tragrahmens (3) abgestützten und einen Zahnriementrieb (12) aufweisenden Antriebsmotor (13) zusammenwirken, wobei dieser (13) mit zwei jeweils einer der Reihen von Wendelzinken (5) zugeordneten Zwischenwellen (16, 17) bzw. diesen jeweils zugeordneten Gelenkwellen (14, 15) an der Antriebswelle (10) nur jeweils einer der Wendelzinken (5) je Reihe angreift.

17. Vorrichtung nach einem der Ansprüche 1 bis 16, **dadurch gekennzeichnet, daß** der jeweils über die Zwischenwelle (16, 17) und die Gelenkwelle (14, 15) angetriebene Wendelzinken (5) im Bereich seiner Antriebswelle (10) ein mit einer Zahnstange (20) kämmendes Antriebs-Zahnrad (19) aufweist, derart, daß mit dieser Zahnstange (20, 21) sämtliche in der Reihe nebengeordneten Zahnräder (19') paralleler Antriebswellen (10') antreibbar und damit deren endseitige Wendelzinken (5) durch eine Bewegungseinleitung (D) synchron drehbar bzw. schwenkbar sind.

18. Vorrichtung nach einem der Ansprüche 1 bis 17, **dadurch gekennzeichnet, daß** beide Reihen der Wendelzinken (5) auf einem jeweiligen zwischen Querwandplatten (22, 23) des Tragrahmens (3) abgestützten Schlittenteil (24, 25) ortsfest gehalten sind und diese beiden Schlittenteile (24, 25) in die Greifstellung senkrecht zur Längsmittelebene (M) des Tragrahmens (3) hin verschiebbar angetrieben (Pfeil N', N") sind.

19. Vorrichtung nach Anspruch 18, **dadurch gekennzeichnet, daß** als Antrieb für die Schlittenteile (24, 25) zumindest ein an den Querwandplatten (22, 23) gehaltener Antriebszylinder (26, 27) vorgesehen ist, mit dem die beiden Reihen von Wendelzinken (5) aus einer einen Aufnahmeraum definierenden Öffnungsstellung in die Greifstellung (C) verschiebbar und aus dieser zurückschiebbar sind.

20. Vorrichtung nach Anspruch 18 oder 19, **dadurch gekennzeichnet, daß** an den Querwandplatten (22, 23) jeweils einer der Antriebszylinder (26, 27) vorgesehen ist, wobei deren jeweils senkrecht zur Längsmittelebene (M) des Tragrahmens (3) verlagerbare Kolbenstange (28, 29) jeweils an einem Schubschenkel (30, 31) eines der beiden Schlittenteile (24, 25) angreift.

21. Vorrichtung nach einem der Ansprüche 18 bis 20, **dadurch gekennzeichnet, daß** die an dem jeweiligen Schlittenteil (24, 25) angreifenden Antriebszylinder (26, 27) mit gegensinnig verlagerbaren Kolbenstangen (28, 29) angeordnet sind und deren Schubbewegung (Pfeil N) mittels zweier zwischen den Schlittenteilen (24, 25) vorgesehener Umlenkgestänge (32, 33) übertragbar ist, derart, daß im Bereich jeweiliger an den Querwandplatten (22, 23) verlaufender Gleitschienen (34, 35) eine gleichmäßige Schubbewegung (Pfeil N', N" bzw. Pfeil A, A') gebildet ist.

22. Vorrichtung zum Aufnehmen und Abgeben von Stückgut nach einem der Ansprüche 1 bis 21, **dadurch gekennzeichnet, daß** deren (1') zumindest zwei im Bereich des Tragrahmens (3') abgestützte Greifer (4, 4') einenends ein gemeinsames Verbindungsgelenk (37) aufweisen, mit dem die jeweilige Bedienstellung der anderenends ein- bzw. herausdrehbar (Pfeil D, D') gehaltenen Wendelzinken (5) veränderbar ist.

23. Vorrichtung nach Anspruch 22, **dadurch gekennzeichnet, daß** das Verbindungsgelenk (37) für die Greifer (4, 4') eine Stützachse (38) definiert, so daß die Greifer (4, 4') in eine Spreizstellung (Z) zur Längsmittelebene (M) verlagerbar sind.

24. Vorrichtung nach Anspruch 22 oder 23, **dadurch gekennzeichnet, daß** eine zum Drehen bzw. Schwenken (D, D') der Wendelzinken (5) vorgesehene zweite Antriebseinheit mit einer in Richtung des Verbindungsgelenkes (37) verlaufenden Zahnwelle (39) versehen ist, die mit jeweiligen Profilringen (40) in jeweilige gegenüberliegende Antriebsritzel (41, 42) der Greifer (4, 4') eingreifen, derart, daß über einen linearen Antrieb der Zahnwelle (39) in Richtung der Stützachse (38) die jeweiligen Wendelzinken (5) dreh- bzw. schwenkbar sind.

25. Vorrichtung nach einem der Ansprüche 22 bis 24, **dadurch gekennzeichnet, daß** die Greifer (4, 4') im Abstand zu dem die Zahnwelle (39) und Antriebsritzel (41, 42) aufweisenden Verbindungsgelenk (37) mit einem die Wendelzinken (5) spreizenden bzw. im Bereich der Längsmittelebene (M) parallel zusammenführenden Antriebsorgan (43) versehen sind.

26. Vorrichtung nach einem der Ansprüche 22 bis 25, **dadurch gekennzeichnet, daß** mit den spreizbaren und dreh- bzw. schwenkbaren Wendelzinken (5) mehrlagiges Stückgut (2'), insbesondere Lebensmittel, erfaßbar und dieses durch Herausdrehen (D, H) der Wendelzinken (5) freigebbar ist.

27. Vorrichtung nach einem der Ansprüche 1 bis 26, **dadurch gekennzeichnet, daß** diese (1, 1') zur Beschickung von enge Ablageräume (44) definierenden Verpackungsbehältnissen (45) mit insbesondere mehrlagigem Stückgut (2') vorgesehen ist.

## Claims

1. Arrangement for picking up and dispensing unit goods (2, 2'), particularly in the form of sacks, bags or similar yielding packs, having at least two grippers (4, 4') which are held in opposite positions on a supporting frame (3, 3'), which can be moved to a gripping position, and by which the unit goods (2, 2') can be taken hold of on the outside and the said unit goods (2, 2') can, after displacement jointly with the arrangement (1, 1'), be released in a dispensing position, **characterised in that** at least one of the grippers (4, 4') is provided with a contacting contour (K) which can at least be twisted out of the gripping position, in such a way that the gripper (4, 4') can be guided along the unit goods (2, 2') in a movement of a "corkscrew" type (arrow E).

2. Arrangement according to claim 1, **characterised in that**, in the region of the contacting contour (K), the gripper (4, 4') fits under the unit goods (2, 2') which are taken hold of, at least in a region or regions.

3. Arrangement according to claim 1 or 2, **characterised in that** at least one of the grippers (4, 4') can both be twisted into the gripping position (arrow E) and twisted out thereof and in the course of these movements the contacting contour (K) is displaceable by sliding against the unit goods (2) at least in a phase or phases.

4. Arrangement according to one of claims 1 to 3, **characterised in that** the two grippers (4, 4') in opposite positions are respectively provided with the contacting contours (K) intended for twisting in and twisting out (E).

5. Arrangement according to one of claims 1 to 4, **characterised in that** the grippers (4, 4') in opposite positions can be twisted into the gripping position or out thereof simultaneously or in succession.

6. Arrangement according to one of claims 1 to 5, **characterised in that** the gripper or grippers (4, 4') is/are slidable (arrow A, A') or pivotable (arrow Z) to pick up the unit goods (2) and at least one of the grippers (4, 4') is then twistable out of the gripping position to dispense the unit goods (2, 2').

7. Arrangement according to one of claims 1 to 6, **characterised in that**, in the region of the contacting contour (K) intended for gripping, picking up and dispensing, the gripper or grippers (4, 4') is/are in the form of spiral tines (5) which extend along a helical curve (S) in three dimensions.

8. Arrangement according to one of claims 1 to 7, **characterised in that** the spiral tine (5) of the gripper (4, 4') is provided with an arc (W) covered by the spiral which comprises more than one 90° arc and which determines the length of the spiral.

9. Arrangement according to one of claims 1 to 8, **characterised in that**, in the region of the spiral tine (5), the gripper (4, 4') can be adjusted to the dimensions and/or the firmness of the particular unit goods (2) or its packing by means of the radius (R) of the spiral of the spiral tine (5), the length or pitch (W, T) of the spiral and the size (D) of the angle of twist performable by the gripper (4, 4').

10. Arrangement according to one of claims 1 to 9, **characterised in that**, on its supporting frame (3, 3'), there are provided two rows of grippers (4, 4') having spiral tines (5) arranged in opposed pairs about a longitudinal centre plane (M).

11. Arrangement according to one of claims 1 to 10, **characterised in that** the spiral tines (5) of the two parallel rows of grippers (4, 4') can be moved towards one another to the gripping position and, to dispense the unit goods (2), are controlled to twist out (arrow E) by making a synchronised pivoting/lifting movement (D, H) and in the course of this can be returned towards the starting position.

12. Arrangement according to one of claims 1 to 11, **characterised in that**, as part of an automatic handling sub-assembly (6), it co-operates with individual drive units (7, 8) by which the twisting in and out (E) of the spiral tines (5) caused by the synchronised pivoting/lifting movement (D, H) can be controlled.

13. Arrangement according to one of claims 1 to 12, **characterised in that** it can be raised (H) or lowered (H') by means of a first drive unit (7) provided in the region of the handling sub-assembly (6), and the means of control of the latter co-operates with a rotary drive (18) for the grippers (4, 4') which is provided on the supporting frame (3) and forms a second drive unit (8), in such a way that, by the combined pivoting/lifting movement (D, H), the twisting in and out (E) of the spiral tines (5) can be controlled as an uninterrupted process.

14. Arrangement according to one of claims 1 to 12, **characterised in that** the twisting in and out (E) of the spiral tines (5) can be controlled by two lifting and rotary drives provided directly on the gripper (4, 4').

15. Arrangement according to one of claims 1 to 14, **characterised in that**, in the region of the gripper (4, 4') the spiral tines (5) are each fastened to the outer end of a carrier arm (9) which is connected at the other end, by means of a drive shaft (10) extending in the direction defined by a vertical axis (B), to a rotary drive (18) which is provided on the supporting frame (3) to form the second drive unit (8).

16. Arrangement according to one of claims 1 to 15, **characterised in that** the spiral tines (5) co-operate with a drive motor (13) which is supported on an upper carrier plate (11) belonging to the supporting frame (3) and which has a toothed-belt transmission (12), the said drive motor (13) engaging with the drive shafts (10) of respective ones only of the special tines (5) in each row by means of respective ones of two intermediate shafts (16, 17) associated with respective ones of the rows of spiral tines (5) or by means of universally jointed shafts (14, 15) which are associated with respective ones of the intermediate shafts (16, 17).

17. Arrangement according to one of claims 1 to 16, **characterised in that**, in the region of its drive shaft (10), the spiral tine (5) which is driven by the respective intermediate shaft (16, 17) and universally jointed shaft (14, 15) has a drive pinion (19) which meshes with a toothed rack (20), in such a way that all the pinions (19'), which are positioned next to one another in the row, of parallel drive shafts (10') can be driven by the said toothed rack (20, 21) and in this way the spiral tines (5) at their ends can be twisted or pivoted in synchronisation by initiating a movement (D).

18. Arrangement according to one of claims 1 to 17, **characterised in that** the two rows of spiral tines (5) are held in a fixed position on respective slider members (24, 25) which are supported between plates (22, 23) forming transverse walls of the supporting frame (3) and these two slider members (24, 25) are displaceably driven (arrows N', N") to the gripping position perpendicularly to the longitudinal centre plane (M) of the supporting frame (3).

19. Arrangement according to claim 18, **characterised in that** what is provided as a drive for the slider members (24, 25) is at least one driving cylinder (26, 27) held on the plates (22, 23) forming the transverse walls by which the two rows of spiral tines (5) can be displaced from an open position which defines a receiving space to the gripping position (C) and back from this latter.

20. Arrangement according to claim 18 or 19, **characterised in that** one of the drive cylinders (26, 27) is provided on each of the plates (22, 23) forming the transverse walls, the piston rods (28, 29) of the said drive cylinders (26, 27) each being displaceable perpendicularly to the longitudinal centre plane (M) of the supporting frame (3) and engaging with a thrust arm (30, 31) belonging to a respective one of the two slider members (24, 25).

21. Arrangement according to one of claims 18 to 20, **characterised in that** the drive cylinders (26, 27) which engage with the respective slider members (24, 25) are so arranged that their piston rods (28, 29) are displaceable in opposite directions, and the thrust movement (arrow N) of the latter can be transmitted by means of two direction-changing linkages (32, 33) provided between the slider members (24, 25), in such a way that thrust movements of equal size (arrows N', N" and arrows A, A') are generated in the region of respective rails for sliding (34, 35) extending along the plates (22, 23) forming the transverse walls.

22. Arrangement for picking up and dispensing unit goods according to one of claims 1 to 21, **characterised in that** its at least two grippers (4, 4') supported in the region of the supporting frame (3') have at one end a common connecting joint (37) by which the operating position at the time of the spiral tines (5) which, at the other end, are held to be twistable in or out (arrows D, D') can be varied.

23. Arrangement according to claim 22, **characterised in that** the connecting joint (37) for the grippers (4, 4') defines an axis of support (38), thus enabling the grippers (4, 4') to be displaceable to a splayed position (Z) relative to the longitudinal centre plane (M)

24. Arrangement according to claim 22 or 23, **characterised in that** a second drive unit which is provided for twisting or pivoting (D, D') the spiral tines (5) is provided with a toothed shaft (39) which extends in the direction of the connecting joint (37) and which, by respective rings of profiling (40), engages with respective drive pinions (41, 42) in opposite positions belonging to the grippers (4, 4'), in such a way that the respective spiral tines (5) can be twisted or pivoted by driving the toothed shaft (39) in a straight line in the direction defined by the axis of support (38).

25. Arrangement according to one of claims 22 to 24, **characterised in that** the grippers (4, 4') are provided, at a distance from the connecting joint (37) having the toothed shaft (39) and drive pinions (41, 42), with a drive member (43) which splays the spiral tines (5) or brings them together to be parallel in the region of the longitudinal centre plane (M).

26. Arrangement according to one of claims 22 to 25, **characterised in that** unit goods (2'), and particularly foodstuffs, in more than one layer can be taken hold of by the spiral tines (5) which are splayable and able to be twisted or pivoted and the said unit goods (2') can be released by twisting (D, H) the spiral tines (5) out.

27. Arrangement according to one of claims 1 to 26, **characterised in that** it (1,1') is intended for the loading with, in particular, unit goods (2') in more than one layer, of pack containers (45) which define confined holding spaces (44).

## Revendications

1. Dispositif de saisie et de délivrance d'objets (2, 2'), en particulier en forme de sacs, sachets ou emballages souples similaires, comportant au moins deux griffes de saisie (4, 4') maintenues l'une en face de l'autre à un cadre porteur (3, 3') et capables d'être déplacées dans une position de saisie, avec lesquelles l'objet (2, 2') peut être saisi extérieurement et libéré dans une position de délivrance après un déplacement conjointement avec le dispositif (1, 1'), **caractérisé en ce qu'**au moins l'une des griffes de saisie (4, 4') est pourvue d'un contour d'appui (K) capable de sortir par rotation au moins hors de la position de saisie, de telle sorte que la griffe de saisie (4, 4') puisse être guidée le long de l'objet (2, 2') à la manière d'un mouvement de tire-bouchon (flèche E).

2. Dispositif selon la revendication 1, **caractérisé en ce que** la griffe de saisie (4, 4') saisit par en dessous l'objet saisi (2, 2') au moins partiellement dans la zone du contour d'appui (K).

3. Dispositif selon la revendication 1 ou 2, **caractérisé en ce qu'**au moins l'une des griffes de saisie (4, 4') est capable non seulement d'entrer par rotation dans la position de saisie (flèche E) mais également de sortir par rotation hors de celle-ci et **en ce que**, lors de ces mouvements, le contour d'appui (K) peut être déplacé au moins par phase de façon à glisser sur l'objet (2).

4. Dispositif selon l'une quelconque des revendications 1 à 3, **caractérisé en ce que** les deux griffes de saisie (4, 4') en face l'une de l'autre sont pourvues chacune du contour d'appui (K) prévu pour la rotation de rentrée ou selon le cas de sortie (E).

5. Dispositif selon l'une quelconque des revendications 1 à 4, **caractérisé en ce que** les griffes de saisie (4, 4') en face l'une de l'autre sont capables d'entrer par rotation dans la position de saisie ou selon le cas de sortir par rotation hors de celle-ci de façon simultanée ou l'une après l'autre.

6. Dispositif selon l'une quelconque des revendications 1 à 5, **caractérisé en ce que** la ou selon le cas les griffes de saisie (4, 4') est/sont capable(s) de coulisser (flèche A, A') ou de pivoter (flèche Z) en vue de saisir l'objet (2) et **en ce qu'**ensuite au moins l'une des griffes de saisie (4, 4') est capable de sortir par rotation hors de la position de saisie en vue de délivrer l'objet (2, 2').

7. Dispositif selon l'une quelconque des revendications 1 à 6, **caractérisé en ce que** la ou selon le cas les griffes de saisie (4, 4') est/sont conformée (s) dans la zone du contour d'appui (K) prévu pour la saisie, le transport et la délivrance en tant que dent en hélice (5) qui s'étend en une courbe spatiale de forme hélicoïdale (S).

8. Dispositif selon l'une quelconque des revendications 1 à 7, **caractérisé en ce que** la dent en hélice (5) de la griffe de saisie (4, 4') est pourvue d'une courbure d'hélice (W) déterminant la longueur d'hélice et présentant une courbure de plus de 90°.

9. Dispositif selon l'une quelconque des revendications 1 à 8, **caractérisé en ce que** la griffe de saisie (4, 4') peut être adaptée dans la zone de la dent en hélice (5) aux dimensions et/ou à la résistance de l'objet (2) en question ou selon le cas de son emballage, par le biais de son rayon d'hélice (R), de sa longueur d'hélice ou selon le cas de son pas d'hélice (W, T) et d'une grandeur d'angle de rotation (D) réalisable par la griffe de saisie (4, 4').

10. Dispositif selon l'une quelconque des revendications 1 à 9, **caractérisé en ce que** deux rangées de griffes de saisie (4, 4') comportant des dents en hélice (5) disposées de façon jumelée les unes en face des autres par rapport à un plan longitudinal médian (M) sont prévues sur son cadre porteur (3, 3').

11. Dispositif selon l'une quelconque des revendications 1 à 10, **caractérisé en ce que** les dents en hélice (5) des deux rangées de griffes de saisie (4, 4') parallèles peuvent être déplacées les unes vers les autres en position de saisie, sont commandées par un mouvement synchrone de pivotement et de levée (D, H) de façon à sortir par rotation (flèche E) en vue de délivrer l'objet (2) et peuvent en l'occurrence être ramenées dans la position de départ.

12. Dispositif selon l'une quelconque des revendications 1 à 11, **caractérisé en ce que** celui-ci (1) coopère en tant que partie d'un groupe de manipulation (6) automatique avec des unités d'entraînement (7, 8) respectives, au moyen desquelles la rotation de sortie ou selon le cas de rentrée (E) des dents en hélice (5) provoquée par le mouvement synchrone de pivotement et de levée (D, H) peut être commandée.

13. Dispositif selon l'une quelconque des revendications 1 à 12, **caractérisé en ce que** celui-ci (1) peut être levé (H) ou selon le cas abaissé (H') au moyen d'une première unité d'entraînement (7) prévue dans la zone du groupe de manipulation (6) et dont la commande coopère avec un entraînement de rotation (18) pour les griffes de saisie (4, 4') prévu en tant que seconde unité d'entraînement (8) sur le cadre porteur (3), de telle sorte que la rotation de sortie ou selon le cas de rentrée (E) des dents en hélice (5) puisse être commandée en tant que processus ininterrompu avec le mouvement de pivotement et de levée (D, H) combiné.

14. Dispositif selon l'une quelconque des revendications 1 à 12, **caractérisé en ce que** la rotation de sortie ou selon le cas de rentrée (E) des dents en hélice (5) peut être commandée par deux entraînements de levée et de rotation prévus directement sur la griffe de saisie (4, 4').

15. Dispositif selon l'une quelconque des revendications 1 à 14, **caractérisé en ce que** les dents en hélice (5) sont fixées dans la zone de la griffe de saisie (4, 4') chaque fois à l'extrémité extérieure d'un bras porteur (9), lequel est relié de l'autre côté à l'entraînement de rotation (18) prévu en tant que seconde unité d'entraînement (8) sur le cadre porteur (3) au moyen d'un arbre d'entraînement (10) qui s'étend dans le sens d'un axe vertical (B).

16. Dispositif selon l'une quelconque des revendications 1 à 15, **caractérisé en ce que** les dents en hélice (5) coopèrent avec un moteur d'entraînement (13) supporté par une plaque d'appui supérieure (11) du cadre porteur (3) et présentant une transmission à courroie dentée (12), celui-ci (13) agissant uniquement chaque fois, avec deux arbres intermédiaires (16, 17) associés chacun à l'une des rangées de dents en hélice (5) ou selon le cas des arbres articulés (14, 15) associés chacun à ceux-ci, sur l'arbre d'entraînement (10) de l'une des dents en hélice (5) de chaque rangée.

17. Dispositif selon l'une quelconque des revendications 1 à 16, **caractérisé en ce que** chacune des dents en hélice (5) entraînées par l'intermédiaire de l'arbre intermédiaire (16, 17) et de l'arbre articulé (14, 15) présente dans la zone de son arbre d'entraînement (10) une roue dentée d'entraînement (19) s'engrenant avec une crémaillère (20), de telle sorte que toutes les roues dentées (19') d'arbres d'entraînement (10') parallèles coordonnées dans une rangée puissent être entraînées avec ladite crémaillère (20, 21) et que leurs dents en hélice (5) du côté de leur extrémité puissent tourner ou selon le cas pivoter de façon synchrone suite à l'introduction d'un mouvement (D).

18. Dispositif selon l'une quelconque des revendications 1 à 17, **caractérisé en ce que** les deux rangées de dents en hélice (5) sont maintenues de façon stationnaire sur un traîneau (24, 25) supporté chaque fois entre des plaques de parois transversales (22, 23) du cadre porteur (3) et **en ce que** lesdits deux traîneaux (24, 25) sont entraînés de façon à pouvoir être déplacés (flèche N', N") perpendiculairement au plan médian longitudinal (M) du cadre porteur (3) dans la position de saisie.

19. Dispositif selon la revendication 18, **caractérisé en ce qu'**il est prévu, en tant qu'entraînement pour les traîneaux (24, 25), au moins un vérin d'entraînement (26, 27) maintenu aux plaques de parois transversales (22, 23), avec lequel les deux rangées de dents en hélice (5) peuvent être déplacées dans la position de saisie (C) depuis une position d'ouverture définissant un espace de saisie et redéplacées hors de celle-ci.

20. Dispositif selon la revendication 18 ou 19, **caractérisé en ce que** l'un des vérins d'entraînement (26, 27) est prévu chaque fois sur les plaques de parois transversales (22, 23), sa tige de piston (28, 29) capable de se déplacer chaque fois perpendiculairement au plan médian longitudinal (M) du cadre porteur (3) agissant chaque fois sur une aile de poussée (30, 31) de l'un des deux traîneaux (24, 25).

21. Dispositif selon l'une quelconque des revendications 18 à 20, **caractérisé en ce que** les vérins d'entraînement (26, 27) agissant chacun sur le traîneau (24, 25) respectif sont disposés avec des tiges de piston (28, 29) capables de se déplacer dans des directions opposées et **en ce que** leur mouvement de translation (flèche N) peut être transmis au moyen de deux tiges de renvoi (32, 33) prévues entre les traîneaux (24, 25), de telle sorte qu'un mouvement de translation uniforme (flèche N', N" ou selon le cas A, A') soit formé dans la zone de chacune des glissières (34, 35) qui s'étendent sur les plaques de parois transversales (22, 23).

22. Dispositif de saisie et de délivrance d'objets selon l'une quelconque des revendications 1 à 21, **caractérisé en ce que** ses (1') deux griffes de saisie (4, 4') au moins supportées dans la zone du cadre porteur (3') présentent à une extrémité une articulation de jonction (37) commune, avec laquelle la position de commande respective des dents en hélice (5) maintenues à l'autre extrémité de façon à pouvoir effectuer une rotation de rentrée ou selon le cas de sortie (flèche D, D') peut être modifiée.

23. Dispositif selon la revendication 22, **caractérisé en ce que** l'articulation de jonction (37) définit un axe d'appui (38) pour les griffes de saisie (4, 4'), de sorte que les griffes de saisie (4, 4') puissent être déplacées dans une position d'écartement (Z) par rapport au plan médian longitudinal (M).

24. Dispositif selon la revendication 22 ou 23, **caractérisé en ce qu'**une seconde unité d'entraînement prévue pour la rotation ou selon le cas le pivotement (D, D') des dents en hélice (5) est pourvue d'un arbre cannelé (39) qui s'étend dans le sens de l'articulation de jonction (37), dont les cannelures s'engrènent avec des bagues profilées (40) respectives dans des pignons d'entraînement (41, 42) opposés respectifs des griffes de saisie (4, 4'), de telle sorte que les dents en hélice (5) respectives puissent tourner ou selon le cas pivoter en direction de l'axe d'appui (38) par l'intermédiaire d'un entraînement linéaire de l'arbre cannelé (39).

25. Dispositif selon l'une quelconque des revendications 22 à 24, **caractérisé en ce que** les griffes de saisie (4, 4') sont pourvues, à distance de l'articulation de jonction (37) présentant l'arbre cannelé (39) et les pignons d'entraînement (41, 42), d'un organe d'entraînement (43) écartant les dents en hélice (5) ou selon le cas les rapprochant de façon parallèle dans la zone du plan médian longitudinal (M).

26. Dispositif selon l'une quelconque des revendications 22 à 25, **caractérisé en ce que** des objets (2') à plusieurs couches, en particulier des aliments, peuvent être saisis avec les dents en hélice (5) capables de s'écarter et de tourner ou selon le cas de pivoter et **en ce que** lesdits objets (2') peuvent être libérés par rotation de sortie (D, H) des dents en hélice (5).

27. Dispositif selon l'une quelconque des revendications 1 à 26, **caractérisé en ce que** celui-ci (1, 1') est prévu pour le chargement de récipients d'emballage (45) définissant des espaces de dépose (44) étroits avec en particulier des objets (2') à plusieurs couches.
